# EUROPEAN PATENT APPLICATION

(11) **EP 1 391 803 A1**
(43) Date of publication of application: **25.02.2004**
(21) Application number: 02700690.7
(22) Date of filing: 21.02.2002
(51) Int. Cl.: G06F 1/26

(54) **COMPUTER DEVICE, EXPANSION CARD, MINI PCI CARD, AUTOMATIC POWER-ON CIRCUIT, AUTOMATIC STARTING METHOD, AND SIGNAL ACTIVATING METHOD**

(30) Priority: 14.03.2001 JP 2001073070
(71) Applicant: INTERNATIONAL BUSINESS MACHINES CORPORATION, Armonk, NY 10504 (US)
(72) Inventor: SUGIURA, Atsuo, c/o IBM Japan Ltd., Yamato-shi, Kanagawa 242-8502 (JP)
(74) Representative: Ling, Christopher John
(86) International application number: PCT/JP2002/001579
(87) International publication number: WO 2002/073384

(57) **Abstract**

A notebook PC is started by turning on a power source with power supply (connection) from an external power source independently of a power switch. A computer device comprises a PCI bus (20), a mini PCI card (60) connected with the PCI bus (20), a DC/DC converter (55) for feeding an auxilliary power source (VccAUX) to the mini PCI card (60) when the device body is connected with a power source, an automatic power-on circuit disposed in the mini PCI card (60) and adapted for activating a PME signal on the PCI bus (20) by using the auxilliary power source (VccAUX) fed from the power source circuit, and a gate array logic (42) and an OR circuit (81) for detecting a PME signal activated by the automatic power-on circuit and outputting the state equivalent to the state in which the power switch is turned on to the DC/DC converter (55).

## Description

### Field of the invention

The present invention relates to an automatic power-on circuit used for a personal computer (PC) such as a notebook type personal computer (notebook PC), and in particular, to an automatic power-on circuit which turns on the power for the PC without operator intervention according to the supply of power.

### Background art

Recently, a PC such as a notebook type personal computer (notebook PC) is used as a service processor which is responsible for remotely managing a large scale computer or a large scale magnetic disk system (disk storage system). In one instance, this notebook PC serving as a service processor may perform a diagnostic or maintenance utility for the large scale computer or disk storage system.

It is desirable to turn on the PC serving as the service processor without operator intervention before it performs the diagnostic or maintenance utility. That is, it is desirable that the PC starts up automatically when the power is supplied to it through an AC adapter (or without an AC adapter). For example, an enterprise may want to install a rewritten program in many PCs at a time in order to reduce the total cost including system maintenance. Such a case will also require that each of the PCs is turned on without operator intervention.

To accommodate such a requirement, there has been a prior configuration wherein, for example, a power switch of the PC is physically held in its ON state. This configuration could allow the PC itself to start up automatically without operator intervention by supplying AC/DC power to it.

### Problems to be solved by the invention

However, many PCs currently on the market meet the specification for power-controlled interfaces called the Advanced Configuration and Power Interface (ACPI) proposed by Intel (USA), Microsoft (USA), and other corporations. The section "POWER BUTTON OVER-RIDE" described in the ACPI requires that, if a power switch is held in its ON state for 4 seconds or longer, a PC should go into a soft-off state equivalent to that where the power is turned off by means of software. Thus, if the power switch is physically held in its ON state like in the prior art, the "POWER BUTTON OVER-RIDE" function would prevent the PC from booting up.

Alternatively, the PC may be started up through the WAKE-ON-LAN function if it is allowed by its basic input/output system (BIOS), operating system (OS), or network card. This WAKE-ON-LAN function allows a local computer to turn on a computer at a remote location for start-up and is a technology to turn on the computer under instructions through a network based on remote operations, instead of an operator's manual power-on operation. However, this technology involves network connection and special controls as well as a configuration which allows for receiving signals from outside through a network, since a particular packet is sent through the network to start up a PC. Namely, this technology requires that a packet is sent through LAN and the PC cannot perform the power-on operation by itself.

The present invention has been made to solve the technical problems described above and it is an object to turn on a PC for start-up through power supply (connection) from an external power supply, irrespective of the power switch.

It is another object to accomplish these functions by inserting a predetermined card into the PC without any change to the PC body.

### Summary of the invention

To attain these and other objects, a computer device according to the present invention comprises a bus capable of connecting an expansion card, auxiliary power supply means for supplying auxiliary power to the expansion card when the device body is connected to a power supply, signal activation means provided in the expansion card for activating a predetermined signal in the bus based on the auxiliary power supplied by the auxiliary power supply means, and power-on means for turning on the power for the device body based on the predetermined signal activated by the signal activation means.

In the computer device, the signal activation means generates a pulse signal of a predetermined pulse width with a delay after the start-up of the supplied auxiliary power and activates the predetermined signal by means of the generated pulse signal. The predetermined signal is a signal line which also serves as a start-up signal to start up the WAKE-ON-LAN function for turning on the power from a remote location.

In the light of another aspect, a computer device according to the present invention comprises a peripheral component interconnect (PCI) bus, a mini PCI card connected to the PCI bus, a power supply circuit for supplying auxiliary power to the mini PCI card when the device body is connected to a power supply, an automatic power-on circuit provided in the mini PCI card for activating a power management event (PME) signal in the PCI bus based on the auxiliary power supplied by the power supply circuit, and output means for detecting the PME signal activated by the automatic power-on circuit to provide the power supply circuit with a state equivalent to that where a power switch is turned on.

According to still another aspect, the present invention provides an expansion card which can be connected to a particular bus in a computer device. The expansion card can be also connected to a bus in a computer device which does not start up automatically when it is connected to a power supply with or without an AC adapter. The expression "does not start up automatically" includes the case where a computer device starts up temporarily but cannot keep its ON state. This interpretation will apply throughout the description herein. It should be appreciated that the computer device to be started up automatically as described above may be, for example, a device which goes into a soft-off state and cannot be booted up when a power switch is held in its ON state after the lapse of a predetermined period of time.

According to still another aspect, the present invention provides a mini PCI card. The mini PCI card comprises pulse signal generation means, when connected to a bus, for generating a pulse signal with a predetermined delay time after the start-up of power supplied when a device body is connected to an AC or DC power supply and activation means, when connected to the bus, for activating a PME signal in the bus based on the generated pulse signal.

According to still another aspect, the present invention provides an automatic power-on circuit provided in an expansion card such as a mini PCI card. The automatic power-on circuit comprises pulse generation means for generating a pulse of a predetermined width from auxiliary power obtained and the pulse generation means includes a noise eliminator for eliminating any noise generated when the auxiliary power starts up and a delay time generator for generating a delay time to yield a predetermined pulse width.

According to still another aspect, the present invention provides an automatic start-up method for automatically starting up a computer device which does not start up automatically without assistance when it is connected to a power supply with or without an AC adapter, comprises activating a particular signal in a bus such as a PCI bus by auxiliary power supplied when it is connected to an AC or DC power supply and detecting the particular signal activated to perform a similar function to turning on a power switch.

In addition, a signal activation method according to the present invention comprises supplying auxiliary power to an expansion card connected to a predetermined bus when a computer device is connected to a power supply with or without an AC adapter, generating a pulse of a predetermined width from the supplied auxiliary power, and activating a predetermined signal in the bus based on the generated pulse.

### Preferred embodiments

Now, the present invention will be described below in detail with reference to an embodiment shown in the accompanying drawings.

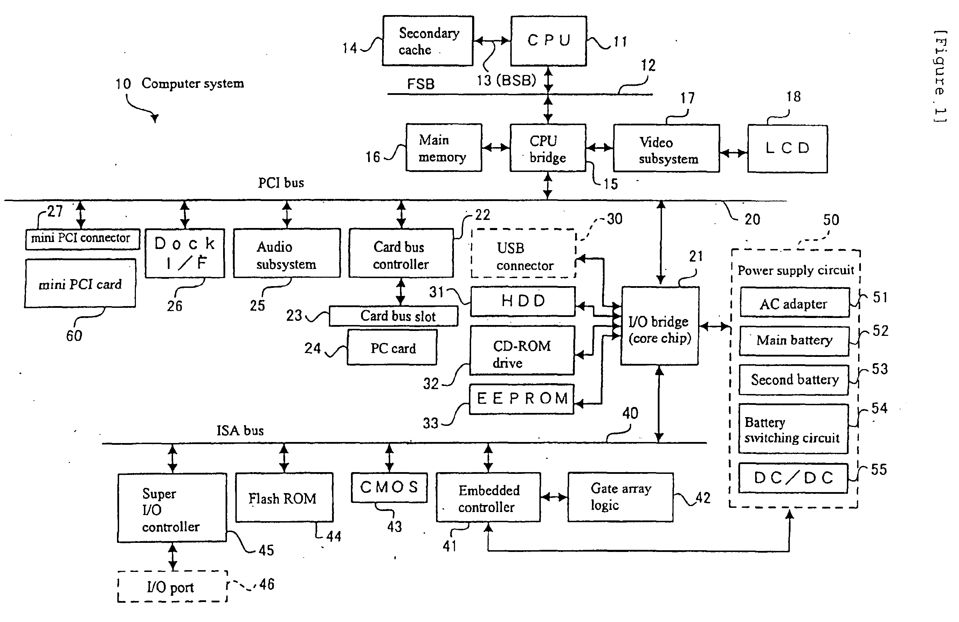

Figure 1 shows the hardware configuration of a computer system 10 according to this embodiment. A computer device comprising the computer system 10 is configured to be, for example, a notebook type personal computer (notebook PC), is conformable to the Open Architecture Developer's Group (OADG) specification and has a predetermined operation system (OS) installed thereon.

In the computer system 10 shown in Figure 1, a CPU 11 serves as the brain for the entire computer system 10 and executes various programs under the control of the OS. The CPU 11 is interconnected with the components via three-level buses: a front side bus (FSB) 12 as a system bus, a peripheral component interconnect (PCI) bus 20 as a bus for faster I/O devices, and an industry standard architecture (ISA) bus 40 as a bus for slower I/O devices. The CPU 11 allows for faster processes by storing program codes and data in a cache memory. Recently, an SRAM of approximately 128 KB is integrated in the CPU 11 as a primary cache but a secondary cache 14 of approximately 512 KB to 2 MB is provided via a back side bus (BSB) 13, which is a dedicated bus, in order to compensate for storage capacity shortages. It should be appreciated that the BSB 13 may be omitted with the secondary cache 14 directly connected to the FSB 12 to avoid the package from having too many terminals, resulting in lower manufacturing costs.

The FSB 12 and the PCI bus 20 are in communication with each other through a CPU bridge (host-PCI bridge) 15 called as a memory/PCI chip. The CPU bridge 15 is configured to include a memory controller function for controlling any access to a main memory 16 as well as data buffer for compensating for any difference in data rate between the FSB 12 and the PCI bus 20. The main memory 16 is a writable memory used as an area into which executable programs for the CPU 11 are loaded or as a working area into which data processed by the executable programs is written. For example, the main memory 16 can be composed of a plurality of DRAM chips to provide a standard storage of, for example, 64 MB, which can be expandable to 320 MB. These executable programs include various drivers for operating the OS and peripheral equipment on a hardware basis, application programs intended for specific applications, and firmware such as a basic input/output system (BIOS) stored in a flash ROM 44 as described below.

A video subsystem 17 is a subsystem to implement video-related functions and includes a video controller. The video controller processes draw instructions from the CPU 11, writes processed picture information into a video memory, and at the same time, reads out the picture information from the video memory to provide it to a liquid crystal display (LCD) 18 as picture data.

The PCI bus 20 is a bus which allows for relatively faster data transfer and is standardized to have a data bus width of 32 bits or 64 bits, a highest operating frequency of 33 MHz or 66 MHz, and a highest data rate of 132 MB/sec or 528 MB/sec. An I/O bridge 21, a card bus controller 22, an audio subsystem 25, a docking station interface (Dock I/F) 26, and a mini PCI connector 27 are connected to the PCI bus 20.

The card bus controller 22 is a dedicated controller to connect a bus signal in the PCI bus 20 directly to an interface connector (card bus) in a card bus slot 23, in which a PC card 24 can be inserted. The docking station interface 26 is hardware to connect a docking station (not shown) which is an expansion unit for the computer system 10. When the notebook PC is placed on the docking station, various hardware elements connected to an internal bus of the docking station are connected to the PCI bus 20 via the docking station interface 26. A mini PCI card 60 which contains an automatic power-on circuit according to this embodiment is also connected to the mini PCI connector 27. The mini PCI card 60 is an expansion card (board) which is expandable according to the mini PCI specification. This mini PCI specification is established for mobile applications and published as an appendix to the PCI Rev. 2.2 specification. It is functionally equivalent to a full-spec PCI.

The I/O bridge 21 has the function of a bridge between the PCI bus 20 and the ISA bus 40. It also has the functions of a DMA controller, a programmable interrupt controller (PIC), a programmable interval timer (PIT), an Integrated Device Electronics (IDE) interface, a Universal Serial Bus (USB), and a System Management Bus (SMB) interface and contains a real time clock (RTC).

The DMA controller function is a function to perform data transfer between the main memory 16 and peripheral equipment such as an FDD without intervention of the CPU 11. The PIC function is a function to cause a predetermined program (interrupt handler) to execute in response to an interrupt request (IRQ) from the peripheral equipment. The PIT function is a function to generate a timer signal at predetermined intervals. An IDE hard disk drive (HDD) 31 is connected to an interface implemented by the IDE interface function and a CD-ROM drive 32 is also connected to the interface through the AT Attachment Packet Interface (ATAPI) scheme. Other types of IDE devices such as a digital versatile disc (DVD) drive may be connected instead of the CD-ROM drive 32. Such external storages as the HDD 31 and the CD-ROM drive 32 are housed, for example, in a place called "media bay" or "device bay" in the notebook PC body. These external storages built in as standard equipment may be mounted exclusively or interchangeably with other equipment such as an FDD or battery pack.

The I/O bridge 21 also has a USB port, which is connected to a USB connector 30 provided, for example, in a wall of the notebook PC body. In addition, an EEPROM 33 is connected to the I/O bridge 21 via an SM bus. The EEPROM 33 is a memory to hold information such as a user-registered password or supervisor password and a product serial number and is a nonvolatile memory whose content is electrically rewritable.

Furthermore, the I/O bridge 21 is connected to a power supply circuit 50. The power supply circuit 50 comprises an AC adapter 51, a battery switching circuit 54 for charging a main battery 52 or a second battery 53 as a battery (secondary battery) and for switching between the power supply paths from these batteries and the AC adapter 51, and a DC/DC converter (DC/DC) 55 for generating a DC constant voltage of 5 V or 3.3 V used for the computer system 10.

Within the core chip constituting the I/O bridge 21, an internal register for managing the power condition of the computer system 10 and a logic (state machine) for managing the power condition of the computer system 10 including the operation of the internal register are provided. This logic sends to and/or receives from the power supply circuit 50 various signals and knows the actual condition of power from the power supply circuit 50 to the computer system 10 through these signals. The power supply circuit 50 controls the power supply to the computer system 10 according to the instructions of this logic.

The ISA bus 40 is a bus having a lower data rate than the PCI bus 20 (for example, a bus width of 16 bits and a highest data rate of 4 MB/sec). An embedded controller 41 connected to a gate array logic 42, a CMOS 43, a flash ROM 44, and a Super I/O controller 45 are connected to the ISA bus 40. In addition, the ISA bus is also used to connect peripheral equipment which operates at a lower speed such as a keyboard/mouse controller. The Super I/O controller 45 connects to an I/O port 46 and controls the driving of the FDD, the input/output of parallel data via a parallel port (PIO), and the input/output of serial data via a serial port (SIO).

The embedded controller 41 controls a keyboard (not shown) and is connected to the power supply circuit 50 to perform part of the power management function in cooperation of the gate array logic 42 through a built-in power management controller (PMC).

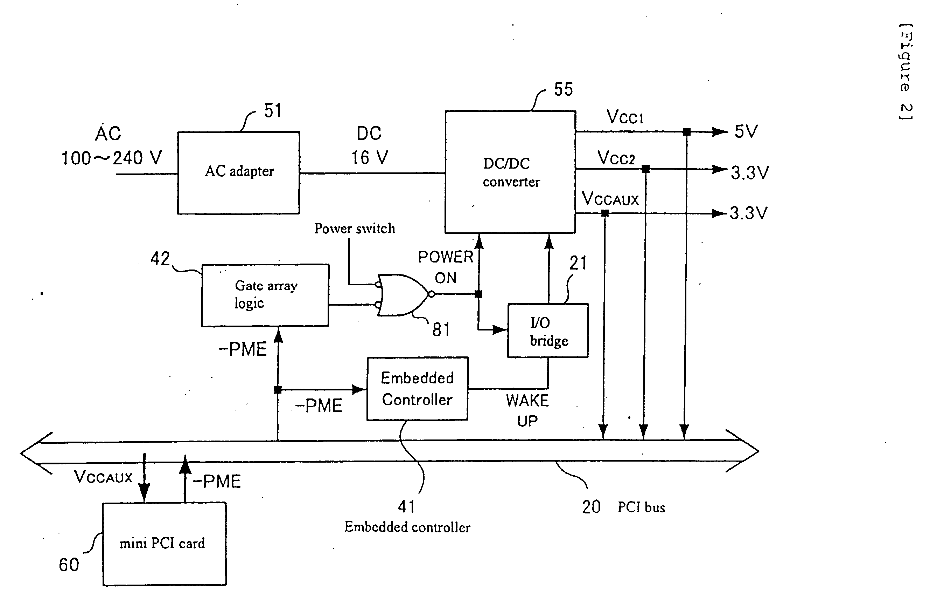

Figure 2 is an explanatory drawing for showing the operation of power supply according to this embodiment. In this embodiment, a pulse generation circuit is added to the mini PCI card 60 to allow for power-on and boot operations for the ACPI-conformable PC power supply in response to the power supply from the AC adapter 51 without operator intervention. The WAKE-ON-LAN function to turn on the PC in response to the instructions through a network is divided into a first aspect wherein the PC starts up from its power-off state and a second aspect wherein the PC automatically wakes up from its sleep state. In this embodiment, the first aspect corresponds to the power-on operation through the gate array logic 42 and the second aspect corresponds to the return from its low power state through the embedded controller 41 and the I/O bridge 21.

The AC adapter 51 shown in Figure 2 receives a supplied voltage of 100 to 240 V AC and converts it to a voltage of 16 V DC. The DC/DC converter 55 receives the DC voltage of 16 V and generates DC constant voltages: Vcc1 of 12 V, 2.5 V, 1.5 V, or 5 V, Vcc2 of 3.3 V, and VccAUX of 3.3 V which is an auxiliary power. The auxiliary power VccAUX is supplied to the PCI bus 20 to allow for automatic power-on when the PC body comprising the computer system 10 is supplied with power from the AC adapter 51. It should be appreciated that at the stage when the power supply is connected via the AC adapter 51, only the auxiliary power VccAUX is provided by the DC/DC converter 55 to portions other than those for power control and that the voltages Vcc1 and Vcc2 are made available when the power switch goes into its ON state.

The auxiliary power VccAUX supplied to the PCI bus 20 through the connected AC adapter 51 is supplied to the mini PCI card 60 connected to the PCI bus 20. The mini PCI card 60 according to this embodiment has an automatic power-on circuit therein. The automatic power-on circuit is configured to be triggered by the auxiliary power VccAUX to provide a negative pulse with a predetermined delay after its rising and is also configured to connect its output to a signal line for the PCI bus 20 called - PME (Power Management Event).

The negative pulse -PME generated by the automatic power-on circuit is supplied to the gate array logic 42 provided in the core chip of the I/O bridge 21. The output of the gate array logic 42 is connected to one input of an OR circuit 81. A power switch is connected to the other input of the OR circuit 81 and either of these inputs allows a POWER ON signal to be supplied to the DC/DC converter 55, turning on the computer system 10. According to this embodiment, the same functions as those performed when the power switch is pressed down can be activated by detecting the -PME pulse through the gate array logic 42. Furthermore, according to this embodiment, the power-on and boot operations can be performed irrespective of the operation of the power switch by mounting the mini PCI card 60 on a PC which supports the WAKE-ON-LAN function.

On the other hand, the wake-up from a low power state which is otherwise performed by the OS is performed by the embedded controller 41 in this embodiment. More specifically, when the embedded controller 41 receives the negative pulse -PME in a sleep or soft-off state, it issues a wake-up instruction to the DC/DC converter 55 via the I/O bridge 21. This can allow the PC to return from its low power state to a previous state.

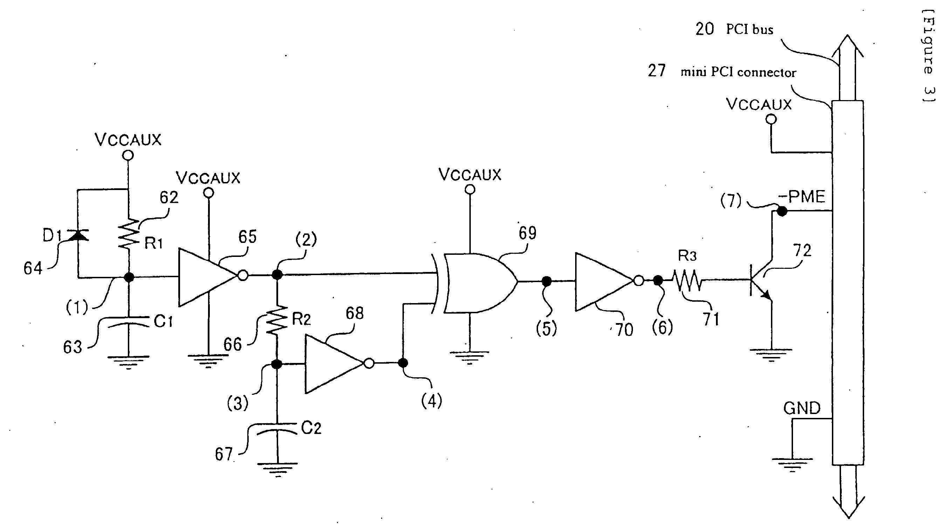

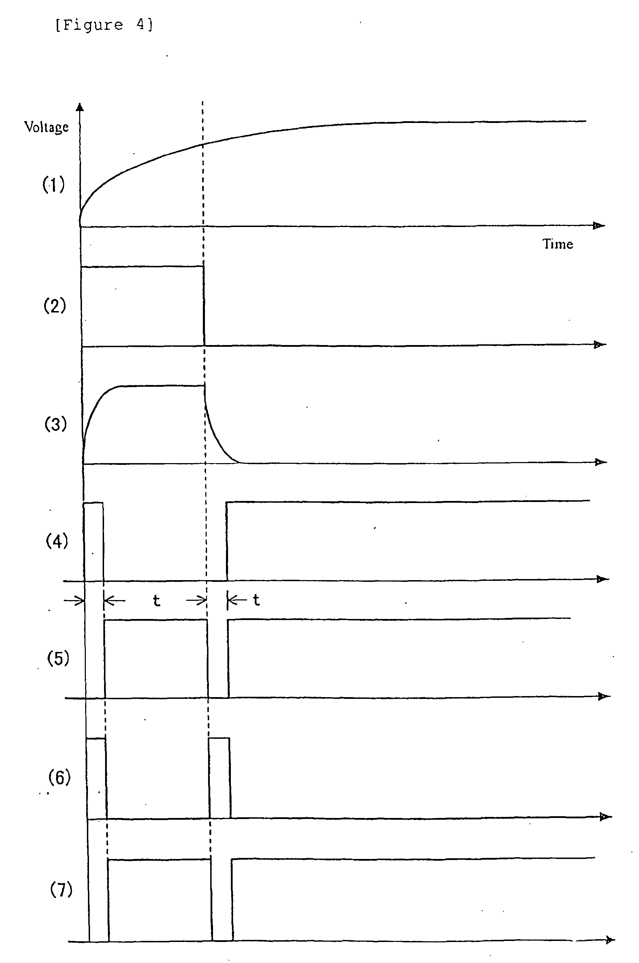

Next, the automatic power-on circuit according to this embodiment will be described below with reference to Figures 3 and 4.

Figure 3 is a circuit diagram for showing an example of the automatic power-on circuit according to this embodiment. Figure 4 shows waveforms obtained at the points (1) to (7) in Figure 3 with the horizontal axis indicating time and the vertical axis indicating voltage. It should be appreciated that the circuit diagram and waveforms in the drawings show only an example of this embodiment and other circuits may be used to implement the present invention.

As shown in Figure 3, the voltage obtained from the auxiliary power VccAUX rises not rapidly but slowly due to a noise reducing section which is constituted by, for example, a resistor of 100 kΩ(R1) 62, a capacitor of 2.2 µF (C1) 63, and a diode 64 (D1). As a result, at the point (1), the voltage rises very gently as shown in Figure 4(1). For example, an intermittent electric current with "crackling" may be caused when the user inserts a connector into an AC convenience receptacle but such a phenomenon can be cancelled by using this noise reducing section to dull the voltage waveform.

Then, the dulled voltage is supplied to an inverter 65 which is an inverting circuit. The inverter 65 determines the input to be 1 which is above a certain threshold level or to be 0 which is below the level for binarization and produces an inverted output. Thus, a waveform as shown in Figure 4(2) is obtained at the point (2). As shown in Figure 4(2), the output voltage changes from 1 to 0 when it exceeds a certain level.

The output from the inverter 65 is supplied to one input terminal of an XOR (exclusive OR) circuit 69. The output from the inverter 65 is also dulled into a gentle waveform by, for example, a resistor of 100 kΩ(R2) 66 and a capacitor of 0.82 µF (C2) 67 and an output waveform as shown in Figure 4(3) is obtained at the point (3). This output is then supplied to an inverter 68 where it is binarized and inverted to produce at the point (4) a phase-inverted output as shown in Figure 4(4), which is shifted in time from the waveform (2) by t (for example, 80 ms). Namely, the resistor (R2) 66, the capacitor (C2) 67, and the inverter 68 constitute the function of generating a predetermined delayed waveform and the function of inverting it. A larger time constant provided by the resistor (R2) 66 and the capacitor (C2) 67 can produce a longer delay time and then, the delayed and inverted output is supplied to the other input terminal of the XOR circuit 69. It should be appreciated that the -PME signal is assumed herein to have a pulse width of "at least 50 ms" and the time t is approximately 80 ms in this embodiment.

The XOR circuit 69 performs the exclusive OR operation and produces an output of 1 when the two inputs (2) and (4) do not match. More specifically, since the two inputs have the same value in their portions corresponding to the delay time t as shown in the waveform of Figure 4(4) but they have different values in other portions, a waveform as shown in Figure 4(5) is obtained at the point (5) in Figure 3. Namely, if any delay occurs, a duration of "0" will be formed.

The output from the XOR circuit 69 is inverted by the inverter 70 and then supplied to a transistor 72 through a resistor of 2.2 kΩ(R3) 71. In the PCI standard, the PME signal can be activated by other circuits for controlling the power management. Therefore, an open collector (open state) allows the collector of the transistor 72 to be used as an output, which will not be affected by other circuits being pulled down to low. It should be appreciated, however, that the inverter 70 is provided between the XOR circuit 69 and the transistor 72 because the output of the transistor 72 is inverted. More specifically, an inverted waveform as shown in Figure 4(6) is obtained at the point (6) which corresponds to the output of the inverter 70 and an electric current having a pulse waveform as shown in Figure 4(7) is supplied to the PME terminal at the point (7) which corresponds to the output of the transistor 72.

It should be appreciated that the -PME signal is used for this embodiment since the signal line also serves as a wake-up signal for the WAKE-ON-LAN function. As described above, the PME wake-up operation described in the PCI standard wakes up a CPU, a hard disk, a display, or any other device in its low power state which is operationally equivalent to suspension. However, the WAKE-ON-LAN in this embodiment refers to turning a system from its OFF state into its ON state and the length requirement for PME signals specified in "PCI Bus Power Management Interface Specification" Rev1.1 does not apply to it. For example, the pulse width of a -PME signal may be defined to be "at least 50 ms" as described above.

Thus, this embodiment requires no change to the PC body because a circuit for driving the -PME signal to active is implemented on the mini PCI card 60. A card which supports the WAKE-ON-LAN function has a similar circuit on the mini PCI card 60 but it cannot allow the PC to turn on by itself because it performs its own function when a magic packet is sent from outside through a network. This embodiment provides a circuit which can unconditionally drive the -PME signal to active when the auxiliary power VccAUX is supplied by the DC/DC converter 55, for example, through the connection of the AC adapter 51, in synchronization with the power supply. This can allow for automatic power-on (outputs Vcc1 and Vcc2) without intervention from outside.

Another embodiment can be configured by using other ICs (for example, reset ICs) capable of generating such a pulse, rather than the circuit shown in Figure 3. Other alternative embodiments can be accomplished by selecting an optional configuration such as that for providing digital outputs by means of a counter. It should be appreciated that the circuit shown in Figure 3 is more advantageous in that the system can be configured at a very low cost.

This embodiment in which the AC adapter 51 is provided has been described above but still another embodiment may be configured, for example, by providing the PC body with a power cable to be connected to commercial power and by providing an AC/DC converter in the PC body rather than the AC adapter 51. In addition, this embodiment is configured to supply the auxiliary power VccAUX but it is unimportant whether the AC adapter 51 is provided, if some power is supplied to the circuits connected to the bus when the system is connected to a power supply.

Giving a summary of the operations in this embodiment, when some power is supplied to the PC body in a mechanical off state, for example, by connecting the AC adapter 51 to a commercial power receptacle, the auxiliary power VccAUX is supplied to the mini PCI card 60 to support the WAKE-ON-LAN function. In the meantime, the mini PCI card 60 is provided with a circuit for generating a negative pulse with a certain delay after the start-up of the power so that any output produced by the supplied auxiliary power VccAUX is connected to the -PME pulse in the PCI bus 20. Thus, the PC body can be waken up from the mechanical off state by managing the -PME pulse.

According to this embodiment, the PC which supports the WAKE-ON-LAN function can turn on and boot up irrespective of the power switch, by providing the PC with the mini PCI card 60 of the configuration described above without any change to the PC body. Consequently, even a PC which goes into a soft-off state due to the ACPI-conformable "POWER BUTTON OVER-RIDE" function, can turn on without any operation of the power switch and thus this can avoid the problem of going into soft-off state. In addition, the maintenance for the PC can be accomplished only by providing a spare mini PCI card 60 because no change is made to the PC body. Furthermore, if the PC in use is to be replaced with a new model PC due to phase out or other reasons, the same functions can be performed by moving the mini PCI card 60 into the new model PC. If any change was made to the PC body to perform the same functions, additional changes would be required each time the PC is replaced with a new one. Thus, the present invention would provide much more advantages and cost reduction effects.

As described above, according to the present invention, a PC can be turned on for start-up through power supply from an external power supply, irrespective of the power switch.

## Claims

1. A computer device, comprising:
a bus capable of connecting an expansion card;
an auxiliary power supply unit for supplying auxiliary power to said expansion card when the device body is connected to a power supply;
a signal activation unit provided in said expansion card for activating a predetermined signal in said bus based on said auxiliary power supplied by said auxiliary power supply unit; and
a power-on unit for turning on the power for the device body based on said predetermined signal activated by said signal activation unit.

2. The computer device according to Claim 1, wherein said signal activation unit generates a pulse signal of a predetermined pulse width with a delay after the start-up of said supplied auxiliary power and activates said predetermined signal by means of said generated pulse signal.

3. The computer device according to Claim 1, wherein said predetermined signal activated by said signal activation unit is a signal line which also serves as a start-up signal to start up the WAKE-ON-LAN function for turning on the power from a remote location.

4. The computer device according to Claim 1, wherein, without said expansion card connected, said device body does not start up when it is connected to said power supply or does not maintain its state even if it starts up.

5. A computer device, comprising:
a peripheral component interconnect (PCI) bus;
a card connected to said PCI bus;
a power supply circuit for supplying auxiliary power to said card when the device body is connected to a power supply; and
an automatic power-on circuit provided in said card for activating a power management event (PME) signal in said PCI bus based on said auxiliary power supplied by said power supply circuit.

6. The computer device according to Claim 5, further comprising an output unit for detecting said PME signal activated by said automatic power-on circuit to provide said power supply circuit with a state equivalent to that where a power switch is turned on.

7. An expansion card which can be connected to a particular bus in a computer device, comprising:
a pulse signal generation unit, when connected to said bus, for generating a predetermined pulse signal from auxiliary power supplied when said computer device is connected to a power supply; and
an activation unit, when connected to said bus, for activating a particular signal line of said bus based on the pulse signal generated by said pulse signal generation unit.

8. The expansion card according to Claim 7, wherein said pulse signal generation unit generates a pulse signal of a predetermined pulse width by taking advantage of the start-up of said supplied auxiliary power.

9. The expansion card according to Claim 7, wherein said activation unit activates a signal line which also serves as a start-up signal to start up the WAKE-ON-LAN function for turning on the power from a remote location.

10. An expansion card which can be connected to a bus in a computer device which does not start up automatically when it is connected to a power supply with or without an AC adapter, comprising:
a unit for receiving a predetermined power supplied when it is connected to said bus and said power supply is connected to said computer device; and
a unit for starting up said computer device automatically by activating a particular signal in said bus based on said supplied power.

11. The expansion card according to Claim 10, wherein said computer device to be started up automatically is a device which goes into a soft-off state and cannot be booted up when a power switch is held in its ON state after the lapse of a predetermined period of time.

12. A mini PCI card, comprising:
a pulse signal generation unit, when connected to a bus, for generating a pulse signal with a predetermined delay time after the start-up of power supplied when a device body is connected to an AC or DC power supply; and
an activation unit, when connected to said bus, for activating a power management event (PME) signal in said bus based on the pulse signal generated by said pulse signal generation unit.

13. An automatic power-on circuit provided in a predetermined expansion card for automatically starting up a computer device to which said expansion card is connected through a bus, comprising:
a pulse generation unit for generating a pulse of a predetermined width from auxiliary power obtained when said computer device is connected to a power supply with or without an AC adapter; and
a unit for activating a predetermined signal in said bus based on the pulse generated by said pulse generation unit.

14. The automatic power-on circuit according to Claim 13, wherein said pulse generation unit includes a noise eliminator for eliminating any noise generated when said auxiliary power starts up and a delay time generator for generating a delay time to yield a predetermined pulse width.

15. The automatic power-on circuit according to Claim 13, wherein said expansion card is a mini PCI card; and
wherein said predetermined signal to be activated is a power management event (PME) signal in a PCI bus.

16. An automatic start-up method for automatically starting up a computer device which does not start up automatically without assistance when it is connected to a power supply with or without an AC adapter, comprising:
activating a particular signal in a predetermined bus by auxiliary power supplied when it is connected to an AC or DC power supply; and
detecting said particular signal activated to perform a similar function to turning on a power switch.

17. The automatic start-up method according to Claim 16, wherein said predetermined bus is a peripheral component interconnect (PCI) bus and said particular signal is a power management event (PME) signal.

18. A signal activation method, comprising:
supplying auxiliary power to an expansion card connected to a predetermined bus when a computer device is connected to a power supply with or without an AC adapter;
generating a pulse of a predetermined width from said supplied auxiliary power; and
activating a predetermined signal in said bus based on the generated pulse.
